# DEMANDE DE BREVET EUROPEEN

(11) **EP 0 845 881 A1**
(43) Date de publication de la demande: **03.06.1998**
(21) Numéro de dépôt: 97402817.7
(22) Date de dépôt: 24.11.1997
(51) Int. Cl.: H04B 10/18, G02F 1/225

(54) **Dispositif d'émission de données optiques**

(30) Priorité: 28.11.1996 FR 9614584
(71) Demandeur: ALCATEL ALSTHOM COMPAGNIE GENERALE D'ELECTRICITE, 75008 Paris (FR)
(72) Inventeur: Penninckx, Denis, 91310 Monthlery (FR); Delansay, Philippe, 75003 Paris (FR)
(74) Mandataire: Fournier, Michel

(57) **Abrégé**

Afin d'augmenter la longueur de transmission de données binaires par fibre optique, le dispositif compense la dispersion chromatique engendrée par la fibre en effectuant une modulation à la fois de puissance et de phase de l'onde optique émise (S), de façon à créer un décalage de phase voisin de 180 degrés à l'intérieur de chaque cellule binaire dans laquelle la puissance optique est basse mais non nulle.

Le dispositif comprend un interféromètre de type "Mach-Zehnder" (1) réalisé sur un substrat d'éléments III-V et conçu pour qu'en l'absence de tensions électriques (Va, Vb) appliquées sur ses électrodes (Ka, Kb) il crée des interférences destructives. Un circuit de commande (2) applique sur les électrodes (Ka, Kb) des tensions de commande (Va, Vb) ayant des composantes continues sensiblement égales, l'une au moins des tensions de commande (Va) résultant de la superposition d'une tension de polarisation (Vpa) et d'un signal filtré (ea) obtenu par filtrage passe-bas d'un signal électrique d'entrée (E).

Application aux transmissions optiques à longue distance par fibres standard.

## Description

L'invention se situe dans le domaine des transmissions de données numériques par des moyens optiques. Elle concerne plus particulièrement la transmission à haut débit sur des liaisons à longue distance utilisant des fibres optiques.

Une telle transmission s'effectue au moyen d'un émetteur optique relié à un récepteur optique par l'intermédiaire de la fibre. L'émetteur utilise une onde porteuse optique dont il module la puissance en fonction de l'information à transmettre. Habituellement, la modulation consiste à faire varier la puissance de l'onde porteuse entre deux niveaux : un niveau bas correspondant à une extinction de l'onde et un niveau haut correspondant à la puissance optique maximum d'un oscillateur laser. Par convention, les niveaux bas et haut représentent respectivement les valeurs binaires "0" et "1". Les variations de niveau de l'onde sont déclenchées à des instants imposés par un signal d'horloge qui définit ainsi des cellules temporelles successives allouées aux données à transmettre.

D'une façon générale, la distance maximale d'une transmission est limitée par la possibilité pour les récepteurs de détecter sans erreur ces deux niveaux de puissance après propagation de l'onde modulée dans la liaison optique. Pour augmenter cette distance, on cherche généralement à augmenter le rapport entre la puissance optique moyenne du niveau haut à celle du niveau bas, ce rapport définissant le "taux d'extinction" qui est une des caractéristiques de la modulation.

Par ailleurs, pour une distance et un taux d'extinction donnés, le débit d'information est limité par la dispersion chromatique engendrée dans les fibres. Cette dispersion qui résulte d'une dépendance de l'indice effectif de la fibre à la longueur d'onde de l'onde transportée a pour conséquence que la largeur des impulsions émises augmente au fur et à mesure de leur propagation le long de la fibre.

Pour limiter les conséquences de ce phénomène, il a été proposé de réduire la largeur de la bande spectrale du signal à transmettre au moyen d'un codage approprié. En particulier, on a proposé d'utiliser le code "duobinaire" bien connu dans le domaine des transmissions électriques. Ce code possède en effet la propriété de diviser par deux la largeur du spectre du signal. Selon ce code, on utilise un signal à trois niveaux symbolisés respectivement par 0, + et -. La valeur 0 binaire est codée par le niveau 0, la valeur 1 est codée soit par le niveau +, soit par le niveau - avec une règle de codage selon laquelle les niveaux codant deux blocs successifs de "1" entourant un nombre respectivement pair ou impair de "0" successifs sont respectivement identiques ou différents.

L'utilisation du code duobinaire pour les transmissions optiques a été mentionnée dans l'article intitulé : "10 Gbit/s unrepeatered three-level optical transmission over 100 km of standard fibre", X.Gu et al, ELECTRONICS LETTERS, 9 décembre 1993, Vol.29, No.25. Selon cet article, les trois niveaux 0, +, - correspondent respectivement à trois niveaux de puissance optique.

La demande de brevet français n°94 047 32, publiée sous le numéro FR-A-2 719 175 décrit également un codage duobinaire appliqué à l'optique. Selon ce document, la valeur "0" binaire correspond toujours à un niveau bas de la puissance optique mais les symboles + et - correspondent respectivement à un même niveau haut de puissance optique et se distinguent par un décalage de phase de la porteuse optique égal à 180°.

L'utilisation de ce dernier code duobinaire à inversion de phase est également mentionnée dans l'article "Optical duobinary transmission system with no receiver sensitivity degradation", K. Yonenaga et al, ELECTRONICS LETTERS, 16 février 1995, Vol.31, No.4.

Bien que ces comptes rendus d'expérimentation de ce code fassent part d'une amélioration par rapport au code NRZ classique ("non retour à zéro"), une telle amélioration n'est pas toujours constatée. Ainsi, lorsqu'on se rapproche des conditions idéales de mise en oeuvre de ce code, notamment en réalisant un taux d'extinction le plus élevé possible, on devrait être en mesure de vérifier une amélioration maximale. Paradoxalement, les simulations et les essais ont donné des résultats contraires à ceux que l'on attendait.

Or, si l'on analyse en détail les effets physiques du code duobinaire dans le contexte de l'optique, on peut constater qu'on obtient bien une diminution de la largeur du spectre du signal. Par contre, ce code n'a pas d'influence sur le spectre de chaque impulsion considérée isolément alors que ce dernier est déterminant pour ce qui concerne les effets de la dispersion chromatique.

Les résultats positifs relatés par divers articles sont difficilement explicables. En effet, si certains paramètres d'expérimentation sont vérifiables (longueur et qualité de la fibre, débit), d'autres paramètres ne sont pas contrôlables avec précision : caractéristiques des composants optiques et fonctionnement réel des circuits électroniques de contrôle.

Après simulations et essais en faisant varier les paramètres d'expérimentation, il est apparu qu'une amélioration est obtenue à condition qu'un décalage de phase de l'onde porteuse se produise à l'intérieur de chaque "0" qui précède ou qui succède à chaque bloc de "1" ou chaque "1" isolé. La valeur absolue du décalage de phase peut être d'environ 180°. Par ailleurs, il ne faut pas chercher à ce que le niveau bas de puissance qui code les "0" soit le plus petit possible, c'est-à-dire que le taux d'extinction soit le plus élevé possible. En pratique, une valeur optimale du taux d'extinction est une fonction complexe des autres paramètres d'expérimentation. On peut le choisir par exemple au plus égal à 20.

Il convient donc de réaliser un dispositif d'émission capable d'appliquer à l'onde porteuse un décalage de phase de l'ordre de 180° à l'intérieur de chaque cellule qui correspond à un "0" logique et qui précède ou succède à tout bloc de cellules consécutives correspondant à un "1" logique ou bien toute cellule isolée correspondant à un "1" logique.

Pour cela, on peut utiliser un oscillateur laser couplé à un modulateur de puissance optique lui-même couplé à un modulateur de phase. Par des commandes électriques appropriées des modulateurs, le modulateur de puissance optique fournit au modulateur de phase une onde d'amplitude variable portée par la longueur d'onde du laser et le modulateur de phase fournit en sortie l'onde modulée en puissance et phase.

En variante, on peut aussi utiliser un oscillateur laser couplé optiquement à un modulateur de puissance. L'ensemble peut être simplement constitué d'un laser à modulateur intégré d'un type connu. Contrairement à la réalisation précédente, la modulation de phase est ici obtenue en agissant sur le courant d'injection du laser. Cette réalisation utilise la propriété des lasers d'osciller à une fréquence variable en fonction du courant d'injection. Dans une réalisation optimisée, le laser sera conçu pour qu'une faible variation de courant entraîne une variation de fréquence suffisante sans que la puissance de l'onde émise subisse des fluctuations appréciables.

Ces deux solutions présentent cependant l'inconvénient de nécessiter une commande électronique complexe et coûteuse.

En vue de simplifier la commande, on peut exploiter le fait que le décalage de phase peut être effectué systématiquement dans chaque cellule contenant un "0" logique et utiliser un modulateur interférométrique de type "Mach-Zehnder". Un tel modulateur comprend une structure interférométrique constituée d'un guide optique d'entrée qui se subdivise en deux branches qui se recombinent pour former un guide de sortie. Des électrodes sont prévues pour appliquer respectivement des champs électriques au travers des deux branches. Lorsque le guide optique d'entrée reçoit une onde porteuse de puissance constante, deux ondes partielles se propagent dans les deux branches, puis interférent en sortie. Le guide de sortie fournit alors une onde dont la puissance et la phase dépendent des valeurs des tensions électriques appliquées sur les électrodes. Pour créer une onde modulée en puissance et phase, on applique sur au moins une des électrodes une tension modulée en amplitude correspondant au signal binaire à émettre.

Les changements de phase devant se produire aux instants où la puissance de l'onde émise a une valeur minimum, il convient de polariser les électrodes de sorte qu'en absence de modulation les composantes continues des tensions électriques appliquées soient telles que l'interférence des deux ondes partielles soit la plus destructive possible. Si le modulateur possède deux branches identiques, cette condition implique que les composantes continues soient différentes.

Le modulateur peut être réalisé sur un substrat de niobate de lithium LiNbO₃. Toutefois, les modulateurs sur LiNbO₃ ne sont pas intégrables, sont chers et vieillissent mal. On peut alors envisager d'utiliser un modulateur interférométrique de même configuration mais réalisé sur un substrat d'éléments III-V, tel que le phosphure d'indium (InP). Cette transposition n'est toutefois pas satisfaisante car, contrairement au cas du niobate de lithium, l'atténuation dans les guides due aux effets électro-optiques non-linéaires dans les éléments III-V est très dépendante des tensions appliquées.

Aussi l'invention a pour but de proposer un dispositif d'émission de données optiques ne présentant pas les inconvénients des solutions précédentes.

Plus précisément l'invention a pour objet un dispositif d'émission de données binaires sous la forme d'une onde optique modulée en puissance et en phase, comportant :
- une structure interférométrique de type "Mach-Zehnder" selon laquelle un guide optique d'entrée apte à recevoir une onde optique d'entrée se subdivise en deux branches pour guider deux ondes partielles, lesdites deux branches se recombinant pour former un guide de sortie, des électrodes étant prévues pour appliquer respectivement des champs électriques au travers desdites deux branches,
- un circuit de commande pour appliquer lesdits champs électriques en fonction d'un signal électrique d'entrée modulé entre des niveaux bas et haut de tension et représentatif des données binaires à émettre,
caractérisé en ce que ladite structure interférométrique est du type p-i-n réalisée sur un substrat d'éléments III-V, en ce que lesdites deux branches sont dimensionnées pour qu'en l'absence de champ électrique appliqué lesdites deux ondes partielles interférent de façon destructive et en ce que ledit circuit de commande est conçu pour appliquer respectivement sur les électrodes des tensions de commande ayant des composantes continues sensiblement égales, l'une au moins desdites tensions de commande résultant de la superposition d'une tension de polarisation et d'un signal filtré obtenu par filtrage passe-bas dudit signal électrique d'entrée.

Grâce au choix d'une structure interférométrique "antisymétrique" et d'une commande adaptée, les tensions moyennes appliquées sur les électrodes sont réduites, ce qui permet de diminuer l'atténuation et de caler les changements de phase par rapport aux passages à 0 de la puissance optique.

Selon une variante qui permet pour un taux d'extinction donné de réduire davantage les tensions moyennes appliquées sur les électrodes, le dispositif est caractérisé en ce que lesdites tensions de commande résultent respectivement de la superposition de tensions et de polarisation et de signaux filtrés obtenus par filtrages passe-bas respectivement dudit signal électrique d'entrée et d'un signal électrique d'entrée complémentaire modulé entre des niveaux bas et haut de tension et représentatif des valeurs complémentaires desdites données binaires à émettre.

Afin de compenser les éventuelles imperfections de fabrication du modulateur antisymétrique, on prévoira avantageusement que les valeurs desdites tensions de polarisation sont choisies pour que l'interférence desdites deux ondes partielles soit la plus destructive possible lorsque lesdites composantes continues sont appliquées sur lesdites électrodes.

D'autres aspects et avantages de l'invention apparaîtront dans la suite de la description en référence aux figures.
- La figure 1 représente un dispositif d'émission selon l'invention.
- La figure 2 est une vue en coupe d'une partie d'un modulateur utilisable pour mettre en oeuvre l'invention.
- Les figures 3 et 4 représentent les courbes caractéristiques d'un modulateur sur InP de configuration classique.
- Les figures 5 et 6 représentent les courbes caractéristiques d'un modulateur sur InP de type antisymétrique lorsqu'une seule électrode est alimentée.
- Les figures 7 et 8 représentent d'autres courbes caractéristiques d'un modulateur antisymétrique lorsque les deux électrodes sont alimentées.
- La figure 9 représente des chronogrammes permettant d'expliquer le fonctionnement du dispositif d'émission selon l'invention.
- La figure 10 représente une variante de réalisation d'un circuit de commande du dispositif d'émission selon l'invention.

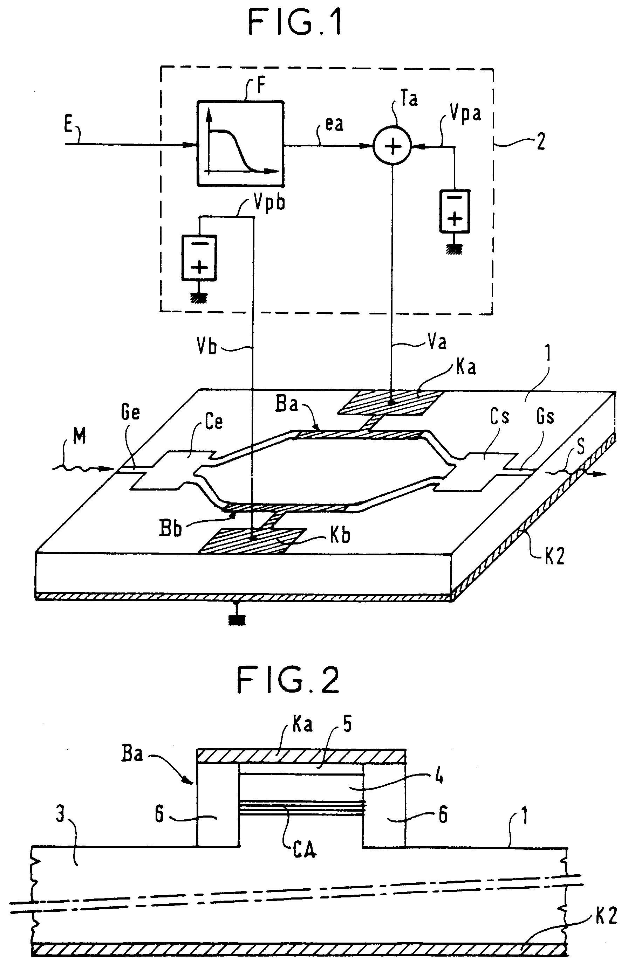

La figure 1 représente un premier exemple de réalisation d'un dispositif d'émission selon l'invention. Le dispositif est essentiellement constitué d'un modulateur de type Mach-Zehnder 1 et d'un circuit électronique de commande 2. Le modulateur 1 est réalisé sur un substrat d'éléments III-V, tel que le phosphure d'indium InP. Il comporte un guide d'entrée Ge qui se subdivise via un coupleur d'entrée Ce en deux branches Ba, Bb. Les deux branches Ba, Bb se rejoignent au niveau d'un coupleur de sortie Cs pour former un guide de sortie Gs. Des électrodes Ka, Kb placées respectivement sur les branches Ba, Bb sont prévues pour recevoir du circuit de commande 2 les tensions Va, Vb. Une troisième électrode K2 placée sur la face inférieure du modulateur 1 est reliée à la masse.

Le guide d'entrée Ge reçoit une onde continue M délivrée par un oscillateur laser non représenté. L'onde de sortie S est fournie par le guide de sortie Gs.

La figure 2 qui représente une vue en coupe du modulateur 1 au niveau de la branche Ba montre plus en détail sa structure interne. Le modulateur 1 est formé sur un substrat d'InP dopé n sur lequel on a formé successivement une couche active CA, une couche d'InP 4 dopé p et une couche de contact 5. La face supérieure du composant a ensuite été gravée latéralement de façon à réaliser une structure dite "ridge". On a ensuite déposé des couches isolantes latérales 6 en polyimide, puis les électrodes supérieure Ka et inférieure K2. La couche active CA a par exemple une structure à puits quantiques.

Pour une longueur d'onde donnée de l'onde optique d'entrée M, le modulateur selon l'invention est conçu pour que les ondes partielles véhiculées dans les branches Ba et Bb interfèrent de façon destructive lorsque aucune tension n'est appliquée sur les électrodes supérieures. Ce résultat peut être obtenu en réalisant des branches de longueurs différentes, de façon à présenter une différence de chemin optique égale à la moitié de la longueur d'onde de l'onde optique d'entrée M.

Par exemple, pour une longueur d'onde d'entrée de 1,56 µm, avec une couche active sur InP ayant une longueur d'onde caractéristique de 1,45 µm, on obtiendra la différence de chemin optique voulue en réalisant des guides dont la différence de longueurs est de 0,24 µm. Au-dessus des branches Ba, Bb, les électrodes auront alors des longueurs égales, par exemple de 600 µm.

Le circuit de commande 2 reçoit un signal électrique d'entrée E de type NRZ et fournit aux électrodes Ka, Kb respectivement les tensions de commande Va, Vb. Selon l'exemple représenté, la tension Vb est une tension de polarisation fixe Vpb négative par rapport à la masse. La tension Va est obtenue par la superposition d'une tension de polarisation négative Vpa et d'un signal de modulation ea obtenu par filtrage F du signal électrique d'entrée E.

Pour bien comprendre le fonctionnement du dispositif de la figure 1, il convient de donner auparavant quelques explications sur le fonctionnement des modulateurs interférométriques réalisés sur un substrat d'éléments III-V tel que l'InP.

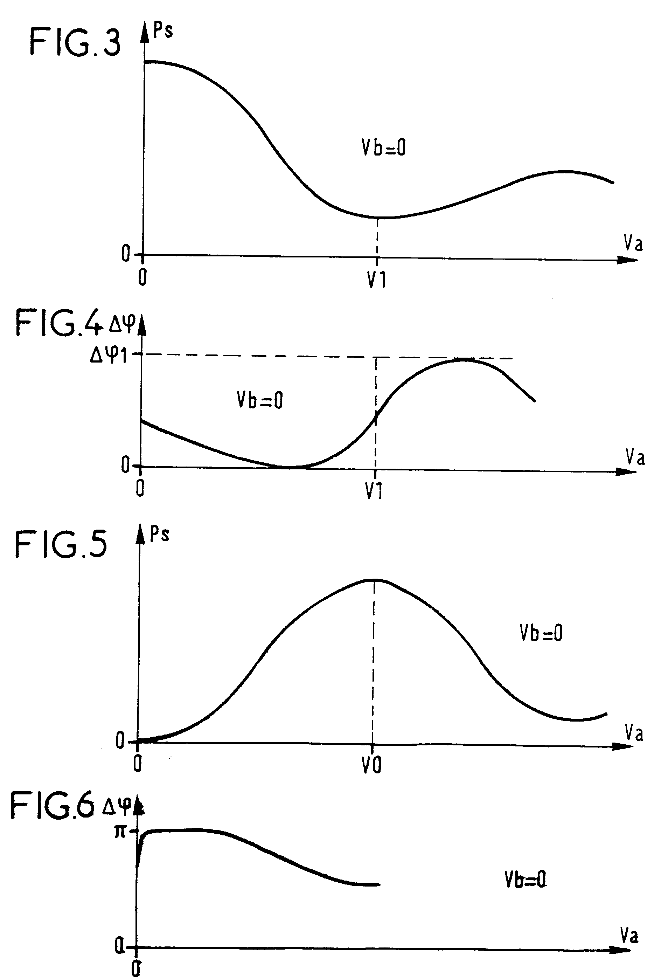

Les figures 3 et 4 représentent les courbes caractéristiques d'un interféromètre symétrique réalisé sur InP. Ces courbes correspondent au cas où l'électrode Kb est à la masse. Comme le montre la figure 3, la puissance optique de sortie Ps varie en fonction de la tension négative Va appliquée sur l'électrode Ka en présentant un maximum lorsque Va=0 et un minimum pour une valeur négative particulière V1. Au-delà de cette valeur, la puissance Ps augmente de nouveau jusqu'à une autre valeur maximale. Cette dernière valeur maximale est inférieure à celle obtenue pour Va=0 à cause de l'atténuation qui dépend de la tension. En considérant la figure 4 qui montre les variations de phase Δϕ correspondantes de l'onde optique de sortie, on constate un décalage de phase Δϕ1 inférieur à 180° au voisinage de la tension V1. On peut remarquer qu'au voisinage de cette valeur l'écart de phase Δϕ varie en fonction Va de façon progressive et que la puissance Ps n'est pas nulle pour Va = V1.

Pour réaliser la modulation souhaitée avec un modulateur symétrique, il convient donc de polariser l'électrode Ka de façon à ce que la tension Va puisse varier au voisinage de V1. Or, compte tenu des courbes caractéristiques, il en résulte un faible taux d'extinction et un calage imprécis du décalage de phase par rapport au point où la puissance optique est minimale. Cet inconvénient ne peut pas être compensé en agissant sur la tension de polarisation de l'électrode Kb car cette dernière doit rester négative.

Les figures 5 et 6 montrent les mêmes courbes caractéristiques pour un modulateur antisymétrique sur InP, toujours dans le cas où l'électrode Kb est à la masse. La puissance optique Ps est alors nulle lorsque Va=0 et est maximale pour une valeur Vo négative. Un décalage de phase de 180° se produit lorsque Va est voisin de 0.

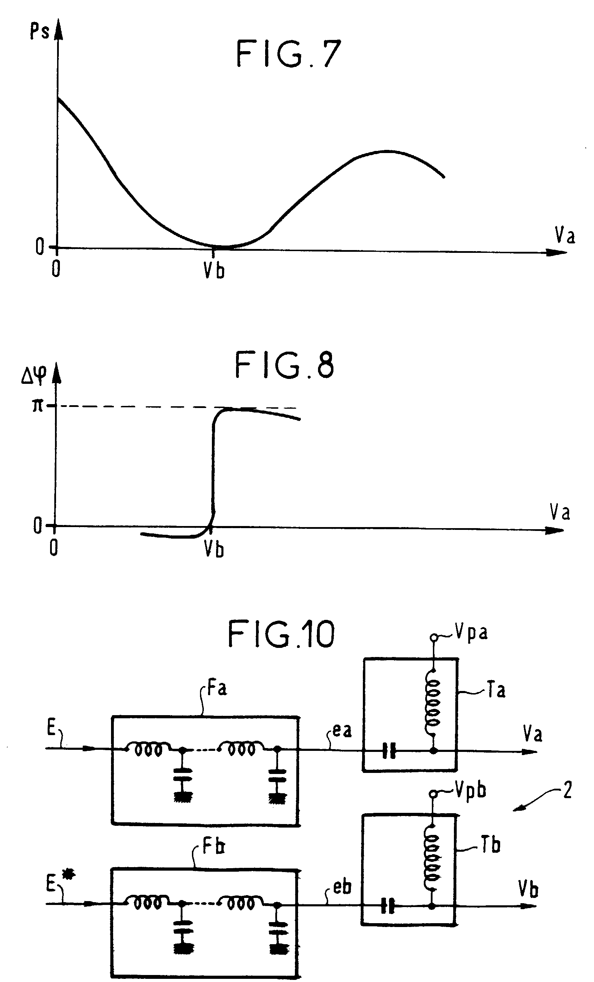

Si maintenant, on applique sur l'électrode Kb une tension Vb négative, on obtient des courbes caractéristiques représentées aux figures 7 et 8. Dans ce cas, lorsque Va varie au voisinage de Vb, la puissance optique Ps passe par 0 et le décalage de phase Δϕ varie rapidement de 180°. Ainsi, en modulant Va aux alentours de Vb, on peut réaliser une modulation de puissance et de phase de l'onde de sortie telle que des décalages de phase Δϕ de 180° se produisent avec précision aux instants où la puissance optique Ps passe par 0. Par ailleurs, du fait que les tensions moyennes appliquées sur les électrodes sont en valeur absolue plus faibles que dans le cas d'un modulateur symétrique, l'atténuation de la puissance de sortie est moins importante.

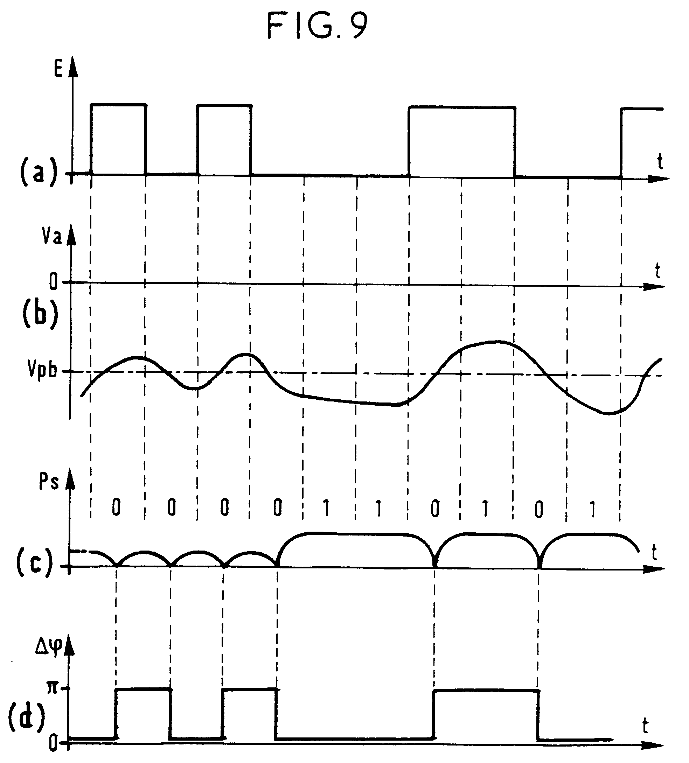

Le fonctionnement du dispositif de la figure 1 va maintenant être expliquée à l'aide des chronogrammes de la figure 9. Le chronogramme (a) montre un exemple de signal électrique d'entrée E de type NRZ. Le signal E est appliqué à l'entrée du filtre passe-bas F qui fournit le signal filtré ea. Ce signal ea est superposé dans l'additionneur analogique Ta à une tension de polarisation Vpa pour fournir la tension de commande Va de l'électrode Ka. Les variations de la tension Va sont représentées sur le chronogramme (b). La tension de polarisation Vpa sera ajustée de façon à ce que la composante continue de la tension Va soit égale à la tension de polarisation fixe Vpb appliquée sur l'électrode Kb. Les variations correspondantes de la puissance optique de sortie Ps et de sa phase Δϕ apparaissent respectivement sur les chronogrammes (c) et (d). On peut constater que l'onde présente un décalage de phase de 180° sensiblement au milieu de chaque cellule temporelle représentative d'un 0 binaire (puissance optique moyenne basse) alors qu'aucun décalage de phase ne se produit dans les cellules temporelles représentatives de 1 logiques (puissance optique moyenne haute).

Selon une variante de réalisation du circuit de commande 2, on peut appliquer sur l'électrode Kb une tension Vb modulée et en opposition de phase par rapport à la tension Va. Pour cela, on peut utiliser le montage représenté à la figure 10 selon lequel le signal électrique d'entrée E et son complément E* sont appliqués respectivement aux entrées de deux filtres passe-bas Fa, Fb. Les filtres Fa, Fb fournissent des signaux filtrés ea, eb qui sont superposés aux tensions de polarisation Vpa, Vpb au moyen des additionneurs analogiques Ta, Tb.

En principe, les tensions de polarisation Vpa et Vpb sont ajustées pour que les composantes continues des tensions Va et Vb soient égales. Toutefois, dans le but de compenser d'éventuelles dispersions de fabrication du modulateur, les tensions de polarisation Vpa et Vpb seront ajustées pour assurer une interférence la plus destructive possible en l'absence de modulations du signal d'entrée, c'est-à-dire dans le cas où seules les composantes continues des tensions Va et Vb seraient appliquées sur les électrodes.

Dans le cas particulier où les signaux filtrés ea, eb n'ont pas de composantes continues, les tensions de polarisation Vpa et Vpb sont respectivement les composantes continues des tensions Va et Vb et sont en principe égales.

Avantageusement, les filtres passe-bas Fa, Fb sont choisis pour présenter une bande passante, exprimée en Hertz, de l'ordre de 0,28 fois le débit, exprimé en bits par seconde, des données binaires E à émettre. Par ailleurs, on préférera un filtre à phase linéaire, tel qu'un filtre de Bessel. Enfin, pour assurer des ondulations suffisantes de la puissance optique dans les cellules temporelles représentant des 0 logiques, il conviendra d'utiliser un filtre de Bessel d'ordre 5.

## Revendications

1. Dispositif d'émission de données binaires sous la forme d'une onde optique (S) modulée en puissance (Ps) et en phase (Δϕ), comportant :
- une structure interférométrique (1) de type "Mach-Zehnder" selon laquelle un guide optique d'entrée (Ge) apte à recevoir une onde optique d'entrée (M) se subdivise en deux branches (Ba, Bb) pour guider deux ondes partielles, lesdites deux branches se recombinant pour former un guide de sortie (Gs), des électrodes (Ka, Kb) étant prévues pour appliquer respectivement des champs électriques au travers desdites deux branches (Ba, Bb),
- un circuit de commande (2) pour appliquer lesdits champs électriques en fonction d'un signal électrique d'entrée (E) modulé entre des niveaux bas et haut de tension et représentatif des données binaires à émettre,
caractérisé en ce que ladite structure interférométrique (1) est du type p-i-n réalisée sur un substrat d'éléments III-V, en ce que lesdites deux branches (Ba, Bb) sont dimensionnées pour qu'en l'absence de champ électrique appliqué lesdites deux ondes partielles interférent de façon destructive et en ce que ledit circuit de commande (2) est conçu pour appliquer respectivement sur les électrodes (Ka, Kb) des tensions de commande (Va, Vb) ayant des composantes continues sensiblement égales, l'une au moins desdites tensions de commande (Va) résultant de la superposition d'une tension de polarisation (Vpa) et d'un signal filtré (ea) obtenu par filtrage passe-bas dudit signal électrique d'entrée (E).

2. Dispositif d'émission selon la revendication 1, caractérisé en ce que lesdites tensions de commande (Va, Vb) résultent respectivement de la superposition de tensions et de polarisation (Vpa, Vpb) et de signaux filtrés (ea, eb) obtenus par filtrages passe-bas respectivement dudit signal électrique d'entrée (E) et d'un signal électrique d'entrée complémentaire (E*) modulé entre des niveaux bas et haut de tension et représentatif des valeurs complémentaires desdites données binaires à émettre.

3. Dispositif d'émission selon l'une des revendications 1 ou 2, caractérisé en ce que pour effectuer ledit filtrage passe-bas, ledit circuit de commande (2) comporte au moins un filtre électronique dont la bande passante, exprimée en hertz, est de l'ordre de 0,28 fois le débit, exprimée en bits par seconde, desdites données binaires à émettre.

4. Dispositif d'émission selon la revendication 3, caractérisé en ce que ledit filtre électronique est un filtre de Bessel.

5. Dispositif d'émission selon la revendication 4, caractérisé en ce que ledit filtre électronique est un filtre de Bessel d'ordre 5.

6. Dispositif d'émission selon l'une des revendications 1 à 5, caractérisé en ce que les valeurs desdites tensions de polarisation (Vpa, Vpb) sont choisies pour que l'interférence desdites deux ondes partielles soit la plus destructive possible lorsque lesdites composantes continues sont appliquées sur lesdites électrodes (Ka, Kb).

7. Dispositif d'émission selon l'une des revendications 1 à 6, caractérisé en ce que lesdites branches (Ba, Bb) sont dimensionnées pour présenter une différence de chemin optique égale à la moitié de la longueur d'onde de l'onde optique d'entrée (M).

8. Dispositif d'émission selon l'une des revendications 1 à 7, caractérisé en ce que lesdites branches (Ba, Bb) comportent des guides de même structure et de longueurs différentes.
